# EUROPÄISCHE PATENTSCHRIFT

(11) **EP 2 389 564 B1**
(45) Veröffentlichungstag und Bekanntmachung des Hinweises auf die Patenterteilung: **18.02.2015**
(21) Anmeldenummer: 10708698.5
(22) Anmeldetag: 21.01.2010
(51) Int. Cl.: G01D 5/20

(54) **VERFAHREN ZUM INDUKTIVEN ERZEUGEN EINES ELEKTRISCHEN MESSSIGNALS SOWIE ZUGEHÖRIGE SENSORVORRICHTUNG**
METHOD FOR THE INDUCTIVE GENERATION OF AN ELECTRICAL MEASURING SIGNAL AND ASSOCIATED SENSOR DEVICE
PROCÉDÉ POUR GÉNÉRER UN SIGNAL DE MESURE ÉLECTRIQUE PAR INDUCTION, ET DISPOSITIF DE DÉTECTION CORRESPONDANT

(30) Priorität: 21.01.2009 DE 102009005579; 16.02.2009 DE 102009009061
(43) Veröffentlichungstag der Anmeldung: 30.11.2011
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2010/000339
(87) Internationale Veröffentlichungsnummer: WO 2010/084000

(56) Entgegenhaltungen:
- WO-A1-2007/012502
- DE-A1- 10 154 710

## Beschreibung

Die Erfindung betrifft ein Verfahren zum induktiven Erzeugen eines elektrischen Messsignals in Abhängigkeit einer zu messenden Größe wie zum Beispiel zum Bestimmen des Weges und/oder der Position im Raum und/oder von Materialeigenschaften eines zu detektierenden Prüfkörpers nach dem Oberbegriff des Anspruches 1. Die Erfindung betrifft ferner eine Sensorvorrichtung zur Durchführung dieses Verfahrens nach dem Oberbegriff des Anspruches 7.

Aus der WO 2007/012502 A1 ist ein Verfahren und eine Vorrichtung zur Entfernungsmessung mittels induktiven Sensoren bekannt. Zum Erhalt eines elektrischen Messsignals, zum Beispiel in Folge der Annäherung eines Prüfkörpers an einen entsprechenden Sensor, werden mehrere Treiberspulen getaktet betrieben. Im Takt einer Taktschaltung induzieren die Treiberspulen eine Spannung in einer Sensorspule, die im ausgeregelten Zustand der Schaltung Null ist. Die so gewonnenen Spannungssignale werden im Takt der Taktschaltung in den Treiberspulen zugeordnete Abschnitte aufgeteilt, die für eine Amplitudenregelung miteinander verglichen werden. Der Differenzwert der Spannungssignale wird im Rahmen der Amplitudenregelung verwendet, um an den Eingängen eines Vergleichers aus dem den Treiberspulen zugeordneten Abschnitten gleich große Spannungssignale ohne taktsynchrone Anteil bzw. Differenzen zu erhalten. In diesem ausgeregelten Zustand wird zusätzlich eine Phasenregelung eingesetzt, um dadurch eine weitere Komponente eines Messsignals zu erhalten (z.B. Metallartenunterscheidung).

Das Prinzip der dabei verwendeten Amplitudenregelung ist an sich aus der EP 706 648 B1 bekannt. Dort werden Lichtsignale unter Kompensation äußerer Einflüsse wie Fremdlicht-, Temperatur- oder Alterungseinflüsse zwischen Lichtsender und Lichtempfänger erfasst. Die Lichtsender werden über einen Taktgenerator zeitabschnittsweise und wechselweise betrieben. Das in der Amplitude wenigstens einer Lichtstrecke geregelte Licht wirkt gegebenenfalls mit dem Licht eines weiteren Lichtsenders wie zum Beispiel einer Kompensationslichtquelle so auf den Lichtempfänger ein, dass ein Empfangssignal ohne taktsynchrone Signalanteile entsteht. Das Empfangssignal des Lichtempfängers wird einem Synchrondemodulator zugeführt, der das Empfangssignal wiederum in die den beiden Lichtquellen entsprechenden Signalkomponenten zerlegt. Diese werden in einem Vergleicher miteinander verglichen, wobei ein einem Nullzustand entsprechendes Signal entsteht. Liegt am Ausgang des Vergleichers kein diesem Nullzustand entsprechendes Signal an, wird die Strahlungsleistung, die den Lichtquellen zugeführt wird, dahingehend geregelt, bis dieser Zustand erreicht ist.

Induktive Näherungsschalter werden zum Beispiel eingesetzt, um den Weg oder die Position im Raum oder Materialeigenschaften eines Prüfkörper zu bestimmen. In der Praxis ist dabei der Schaltabstand des Nährungssensors meist gering oder unterschiedliche Metalle wie Stahl St37, paramagnetische Metalle wie Aluminium oder diamagnetische Metalle wie Kupfer können nur mit besonderen Schaltungsanordnungen mit gleicher Empfindlichkeit identifiziert werden. Die Lösung nach der WO 2007/012502 A1 konnte bereits zu einer Verbesserung beitragen, erfordert jedoch neben der Amplitudenregelung auch eine Phasenregelung.

Aus der DE 101 54 710 A1 sind eine Vorrichtung und ein Verfahren zur Detektion der Position eines Targets bekannt. Hierzu werden in Sendespulen elektromagnetische Felder erzeugt, die mittels Empfangspulen detektiert werden. Zwischen den Sendespulen und den Empfangsspulen wird ein Target angeordnet, das detektiert wird. Das Target ist in seinen Materialeigenschaften und in seiner Größe derart gewählt, dass, wenn das Target zwischen Sende- und entsprechender Empfängerspule angeordnet ist, die in der Empfängerspule induzierte Spannung detektierbar reduziert wird. Die entsprechende Reduzierung des von der Sendespule aufgebauten Feldes erfolgt durch die Entstehung von Wirbelströmen im Target. Es wird also das Nichtvorhandensein von der in der Empfangsspule induzierten Spannung detektiert. Sind mehrere Sende- und Empfangsspulenpaare vorgesehen, sind diese zur Detektion der Position ausgestaltet, das heißt, dass eine Einkopplung des Felds von einer Sendespule in eine andere als der dieser Sendespule zugeordneten Empfangsspule vermieden werden soll.

Aus der DE 33 29 515 C2 ist eine elektrische Schaltungsanordnung für einen magnetisch-induktiven Sensor und eine entsprechende Sensorvorrichtung zur Positionsbestimmung eines ferromagnetischen Körpers bekannt. Die Sensorvorrichtung umfasst mehrere Sendespulen, eine Empfangseinrichtung und einen Taktgeber, der die Stromversorgung der Sendespulen, den Abruf des Messsignals von der Empfangseinrichtung und die der Verarbeitung dienenden Bauteile steuert. Zwischen den Sendespulen und dem ferromagnetischen Körper befindet sich eine elektrisch leitende Zwischenmasse. Das die Messsignale abrufende Bauteil wird hierbei erst nach der Stabilisierung der in der Zwischenmasse induzierten Wirbelströme an die Empfangseinrichtung angeschlossen.

Die EP 0 798 502 B1 zeigt einen Lage-/Wegesensor zur Erfassung einer Ventilstellung, der eine Auswerteschaltung zur Erfassung der Länge eines durch eine Phasenverschiebung bewirkten Zeitfensters ein Exclusiv-Oder-Glied und ein einem Zähler nachgeschaltetes Register aufweist, in das die jeweiligen Zählergebnisse einlesbar sind. Zur Erfassung des Kolbens des Ventils ist eine induktive Anordnung vorgesehen, die zwei in Bewegungsrichtung des Kolbens nebeneinander angeordnete Spulen umfasst. Die Auswerteschaltung dient zur Messung der durch die Lageänderung des Kolbens hervorgerufen Verstimmung der induktiven Anordnung, wobei als Verstimmung eine Phasenverschiebung der jeweiligen gemessenen Wechselspannung zueinander ausgewertet wertet.

Ein Verfahren zur induktiven Messung einer Relativbewegung oder einer Position eines ersten Gegenstands in Bezug auf einen zweiten Gegenstand ist aus der WO 2007/006910 A1 bekannt. Hierzu sind zwei Sendespulen und zwei Empfangsspulen vorgesehen, wobei die Sendespulen auf dem ersten Gegenstand angeordnet sind und die Empfangspulen auf dem zweiten Gegenstand und innerhalb des durch die Sendespulen erzeugten Magnetfeldes angeordnet sind. Zur Bestimmung der relativen Verschiebung der Gegenstände wird das Ausgangssignal der Empfangspule verwendet. Bei den zu überwachenden Gegenständen handelt es sich um Teilstücke eines aus einer Vielzahl von Spiegelelementen aufgebauten Teleskops, wobei zur Positionsbestimmung die gemeinsame Induktivität der Spulenanordnung verwendet wird und die Spannungen gemessen werden, die in den Empfangsspulen durch den Transformatoreffekt induziert werden. Hierzu wird die Spannung an den Empfangsanschlüssen verwendet, das heißt mit einer quasi-unbeschränkten Impedanz.

Aus der WO 93/20409 A1 ist ein Verfahren zur Sensoransteuerung und Signalverarbeitung bekannt. Hierzu wird ein Sensor primärseitig mit einem oszillierenden Eingangssignal gespeist und sekundärseitig das Ausgangssignal des Sensors detektiert und verstärkt. Die sekundärseitige Signalaufbereitung und -verarbeitung erfolgt hierbei digital. Der Sensor umfasst eine Spulenanordnung aus einer Eingangs- und zwei Ausgangsspulen und einen Kern, dessen Position detektierbar ist.

Der Erfindung liegt die Aufgabe zu Grunde, ein Verfahren und eine Sensorvorrichtung zum induktiven Erzeugen eines elektrischen Messsignal derart zu verbessern, dass sich eine erhöhte Empfindlichkeit bzw. ein erhöhter Schaltabstand bei kompaktem Aufbau erreichen lässt.

Diese Aufgabe wird durch ein Verfahren mit den Merkmalen des Anspruches 1 und eine Sensorvorrichtung mit den Merkmalen des Anspruches 7 gelöst.

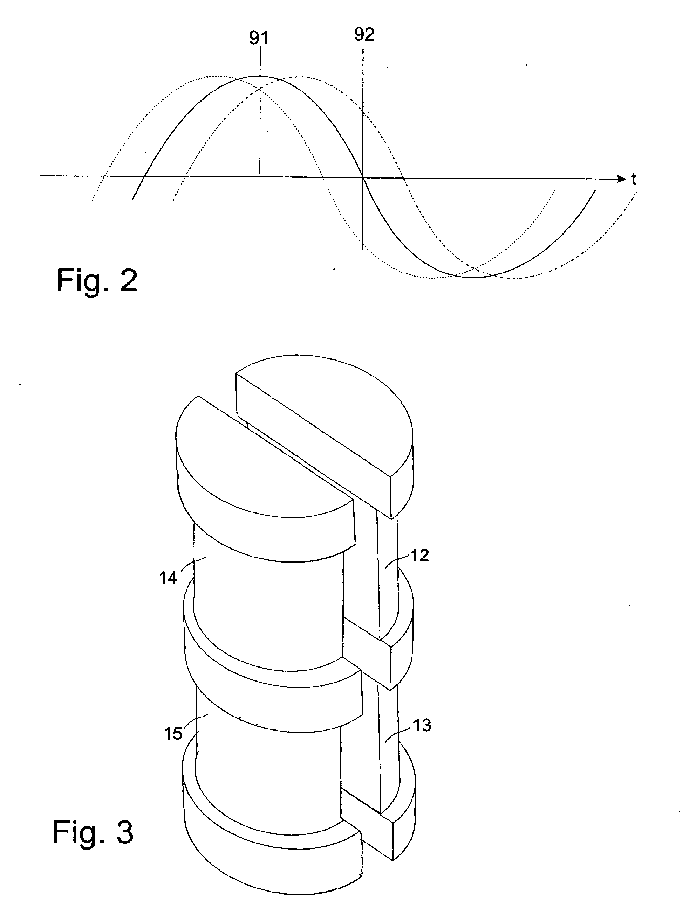

Durch die Verwendung einer Gruppe aus mindestens zwei Treiberspulen und einer Gruppe aus mindestens zwei Sensorspulen, wobei die eine dieser Gruppen dieser Spulen z.B. gleichsinnig geschaltet und die andere dieser Gruppen dieser Spulen gegensinnig geschaltet ist, ergibt sich ein Mehrfaches des bisher üblichen Schaltabstandes. Im Ausgangszustand der Schaltung, also ohne Prüfkörper, heben sich an den Sensorspulen die darin induzierten Spannungen gegenseitig auf. Wird jedoch durch einen Prüfkörper das Magnetfeld zwischen einer Treiberspule und einer Sensorspule beeinflusst, wird die an der Sensorspule induzierte Spannung so verändert, dass das Vorhanden sein und/oder bestimmte Eigenschaften des Prüfkörpers erkannt werden können. Dazu wird das Spannungssignal an den Sensorspulen zu bestimmten bzw. vorbestimmten oder vorbestimmbaren, von der Taktschaltung vorgegebenen Zeitpunkten abgetastet. Die Abtastung kann zu verschiedenen Abtastzeitpunkten erfolgen. An einem Abtastzeitpunkt werden z.B. die Änderungen der maximalen Amplitude erkennbar, während ein weiterer, vorzugsweise um 90 Grad phasenverschobener Abtastzeitpunkt einen Hinweis auf die Phasenverschiebung gibt. Mit diesen Informationen von Amplitude und Phase lässt sich der Prüfkörper identifizieren. Beim Abtasten im Bereich der maximalen Amplitude, beispielsweise wenn im ausgeregelten Zustand die weitere Nachregelung abgeschaltet ist - wobei der in Fig. 2 gezeigte Spannungsverlauf sichtbar wird - wird eine maximale Empfindlichkeit bei der Detektion beliebiger Prüfkörper erreicht, während bei einem Abtastzeitpunkt im Bereich des Nulldurchgangs der Signale (d.h. zum Maximum um ungefähr 90° in der Phase verschoben) sich die Metallart des Prüfkörpers bestimmen lässt.

Vorzugsweise werden die ermittelten Signale, wie aus der EP 706 648 B1 bekannt, in den einzelnen Taktabschnitten zugeordnete Zeitabschnitte zerlegt, wobei davon abweichend erfindungsgemäß hier diese Taktabschnitte beispielsweise 1% bis 10% der Taktzeit betragen können, miteinander verglichen und der so gewonnene Differenzwert zur Regelung der Leistung genutzt, die den Treiberspulen zugeführt wird. Dies hat wiederum Einfluss auf die in den Sensorspulen induzierten Spannungssignale, so dass die Regelung das Ziel verfolgt, dass an den Eingängen des Vergleichers gleich große Spannungen bzw. keine Differenzspannung aus den verschiedenen Sensorspulen anliegen. Bei Vorliegen einer Differenzspannung ist der gewonnene Differenzwert und insofern Regelwert gleichzeitig ein Wert für Ort, Weg und Position im Raum des Prüfkörpers bzw. für die Annäherung des Prüfkörpers.

Bei einer Ausführungsform, bei der die Sensorspulen gegensinnig geschaltet sind, erfolgt bei einer Zusammenschaltung der Sensorspulen eine Kompensation von Fremdmagnetfeldern. Diese Kompensation von Fremdmagnetfeldern gestattet eine hohe Verstärkung der Spannungssignale der Sensorspulen, so dass auch kleinste Änderungen in der Veränderung der Einwirkung der Treiberspule wahrnehmbar sind, was dazu führt, dass Prüfobjekte in größeren Schaltabständen detektiert werden können.

Bei einer Ausführungsform mit gegensinnig geschalteten Treiberspulen und gleichsinnig geschalteten Sensorspulen entfällt die Möglichkeit einer Kompensation von Fremdmagnetfeldern bei einer Zusammenschaltung der Sensorspulen.

Weitere Vorteile ergeben sich aus der nachfolgenden Beschreibung und den weiteren Ansprüchen.

### Kurzbeschreibung der Figuren

Im Folgenden wird die Erfindung an Hand von in den Figuren dargestellten Ausführungsbeispielen näher erläutert. Es zeigen:
- Fig. 1a: Ein schematisches Schaltbild einer ersten Ausführungsform einer erfindungsgemäßen Schaltung zum induktiven Erzeugen eines elektrischen Messsignals,
- Fig. 1b: ein schematisches Schaltbild einer zweiten Ausführungsform einer erfindungsgemäßen Schaltung zum induktiven Erzeugen eines elektrischen Messsignals,
- Fig. 2: das Spannungssignal bei verschiedenen Prüfkörpern und zu verschiedenen Abtastzeitpunkten im nicht ausgeregelten Zustand,
- Fig. 3: die Anordnung der Treiberspulen und Sensorspulen.

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Sensorvorrichtung zum induktiven Erzeugen eines Messsignals in Abhängigkeit einer zu messenden Größe wie zum Beispiel zum Bestimmen des Weges und/oder der Position im Raum und/oder von Materialeigenschaften eines zu detektierenden Prüfkörpers O. Verwendet werden dazu zwei Treiberspulen 12, 13, die im Takt einer Taktschaltung 11 nacheinander von einem Strom durchflossen werden. Die Taktschaltung 11 gibt dazu ein Taktsignal am Ausgang 11 a aus, das der Spule 13 über einen Treiber direkt und der Spule 12 über einen Treiber und über den Inverter 22 zugeführt wird. Grundsätzlich sind auch mehr als zwei Treiberspulen 12, 13 und mehr als zwei Sensorspulen 14, 15 denkbar. Die Spannung in den Treiberspulen 12, 13 induziert in den Sensorspulen 14, 15 eine von der zu messenden Größe und damit vom Prüfkörper O abhängige Spannung. Diese Spannung liegt an den Eingängen 23a, 23b eines vorzugsweise symmetrischen Verstärkers 23 an. Entsprechend der Spannung am Ausgang 23c des vorzugsweise symmetrischen Verstärkers 23 liegt über die Leitung 41 das Signal S13 am Synchrondemodulator D1 an. Im ausgeregelten Zustand besteht das Signal S13 lediglich aus dem Verstärkerrauschen des Verstärkers 23 ohne taktsynchrone Anteile.

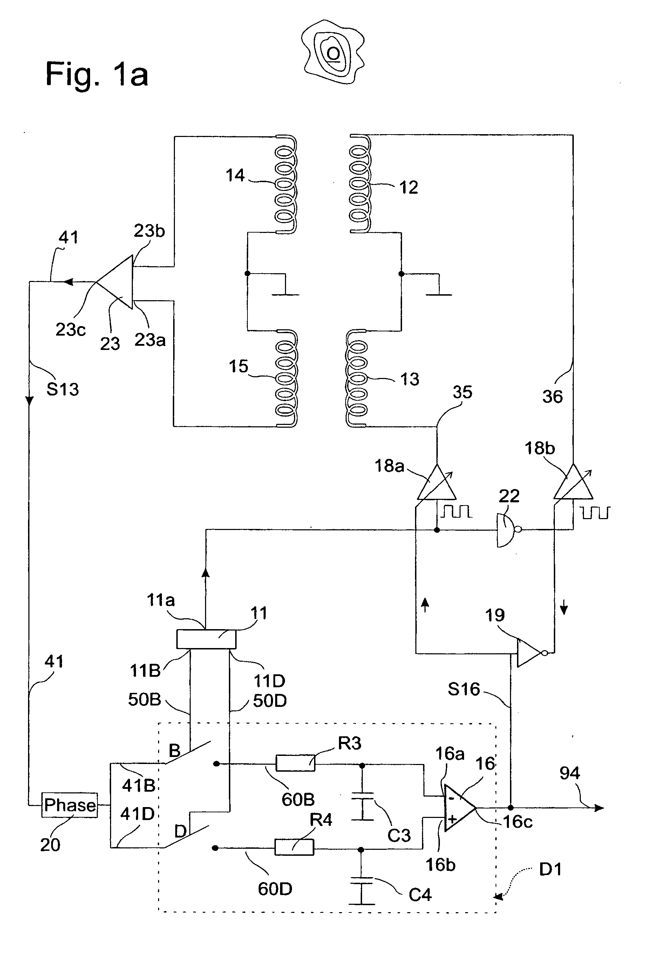

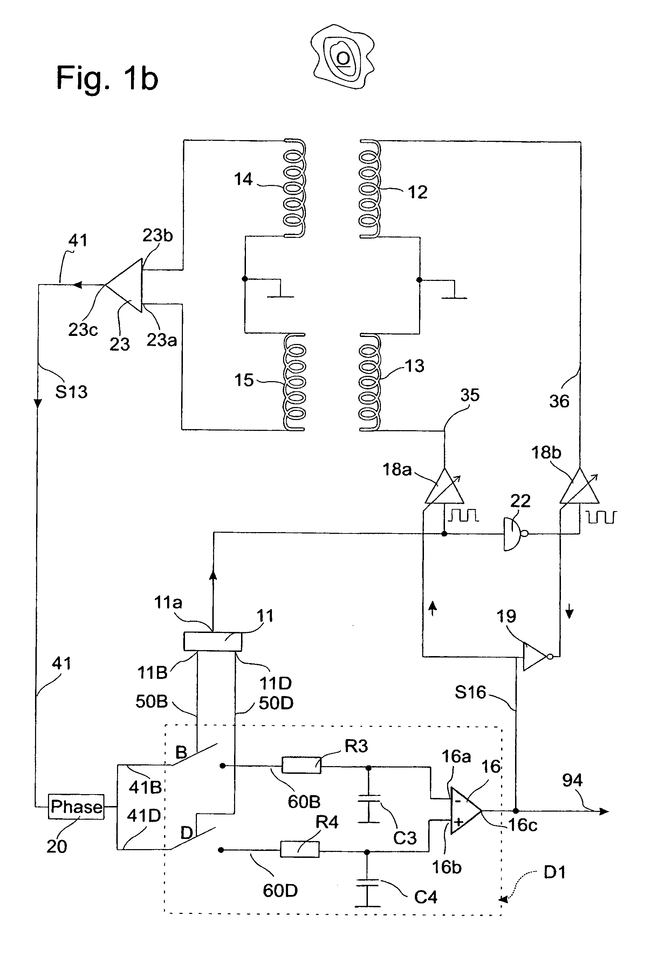

Figuren 1a und 1b in Verbindung mit Figur 3 zeigen zwei Treiberspulen 12,13 sowie zwei Sensorspulen 14, 15. In den gezeigten Ausführungsbeispielen handelt es sich um halbkreisförmige Spulenkörper, die räumlich parallel zueinander angeordnet sind. In Fig. 3 wurden der Einfachheit halber die Windungen der Spulenkörper Treiberspulen 12, 13, Sensorspulen 14, 15) in den gegenüber dem äußeren Umfang zurückgesetzten Bereichen weggelassen. Die Anordnung gemäß Figur 3 lässt sich insofern besonders einfach in einem Gehäuse einfassen, wodurch ein Sensor mit einer z.B. geschlossenen Sensoroberfläche ausgebildet werden kann, wobei der Spulenkörper mit einer Oberfläche aus Kunststoff oder Metall versehen werden kann. Andere Formen der Spulen statt der halbkreisförmigen Form sind möglich.

Gemäß Fig. 1a sind die Sensorspulen 14, 15 so geschaltet, dass ein Fremdmagnetfeld, das auf beide Sensorspulen 14, 15 einwirkt, Störsignale am Ausgang 23c des Verstärkers 23 erzeugt. Bei einer Umkehrung der Anordnung einer der beiden Sensorspulen, wie in Fig. 1b gezeigt, erfolgt eine Fremdfeldkompensation, so dass keine Störsignale am Ausgang 23c des Verstärkers 23 anliegen.

Grundsätzlich kann jedoch jede weitere Spulenanordnung, beispielsweise eine parallele Schaltung der Spulen, verwendet werden, wenn gewährleitstet ist, dass am Ausgang 23c des Verstärkers 23 im ausgeregelten Zustand der Schaltungsanordnung kein Signal mit taktsynchronen Anteilen anliegt.

Das so ermittelte Signal S13, das durch Kenntnis des Takts der Taktschaltung 11 den jeweiligen Treiberspulen 12, 13 zuzuordnen ist, wird vor dem Synchrondemodulator D1 abgetastet. Hierzu werden die Schalter B, D nur zu einem im Verhältnis zur gesamten Taktperiode kurzen Zeitabschnitt geschaltet. Der Synchrondemodulator D1 kann auch anders z.B. in Form eines 1 Bit A/D-Wandlers aufgebaut sein. Diese Lösung ist z.B. in einem von der Firma ELMOS Semiconductor AG erhältlichen Integrierten Schaltkreis - IC -909.05 gewählt. Da in diesem IC der Abtastzeitpunkt im Verhältnis zur Taktphase fixiert ist (etwa in der Mitte der Taktphase) kann zur Differenzierung, z.B. zwischen höchster Empfindlichkeit und zur Metallartenunterscheidung, ein Phasenschieber 20 vorgesehen sein. In diesem Fall wird z.B. einmal im Bereich der maximalen Amplitudenänderung (höchste Empfindlichkeit) oder im Bereich maximaler Phasenverschiebung (Metallartenunterscheidung) abgetastet. Zur Erreichung gleicher Empfindlichkeit bei allen Metallarten können auch ein oder mehrere weitere Abtastzeitpunkte gewählt werden. Auf den Phasenschieber 20 kann verzichtet werden, wenn der Abtastzeitpunkt frei wählbar ist.

Gemäß Fig. 3 sind die vorzugsweise auf einer geometrischen Achse angeordneten Treiberspulen 12, 13 räumlich parallel zu den vorzugsweise auf einer geometrischen Achse angeordneten Sensorspulen 14, 15 angeordnet. Andere Anordnungen, in denen die Spulen nicht auf einer geometrischen Achse angeordnet sind, sind jedoch auch denkbar. Die Anzahl der Treiberspulen 12, 13 entspricht in den hier gezeigten Ausführungsbeispielen der Anzahl der Sensorspulen 14, 15, wobei auch andere Anordnungen denkbar sind, sofern die gleichsinnige und gegensinnige Schaltung der Spulen gewährleistet ist, so dass taktsynchrone Anteile des Ausgangssignal ausgelöscht werden.

In den gezeigten Ausführungsbeispielen wird das Signal S13, das von den Sensorspulen 14, 15 kommt, über die Leitung 41 und den Phasenschieber 20 dem Synchrondemodulator D1 zugeleitet. Je nach Ansteuerung der Schalter B und D ausgehend von den Ausgängen 11 B und 11D der Taktschaltung 11 über die Steuerleitungen 50B und 50D, wird das Spannungssignal den Leitungen 60B, 60D, den Widerständen R3, R4 und Kondensatoren C3, C4 im Takt der Taktschaltung 11 den Eingängen 16a, 16b des Vergleichers 16 zugeleitet. Im Ausgangszustand, das heißt wenn kein Prüfkörper O detektiert wird bzw. vorhanden ist, sind die Spannungssignale an den Eingängen 16a, 16b des Vergleicher 16 gleich groß, so dass am Ausgang 16c des Vergleichers 16 ein bestimmter Regelwert anliegt, der zu gleichen Eingangswerten an den Eingängen 16a, 16b des Vergleichers 16 führt. Als Vergleicher kann z.B. ein hochverstärkender Operationsverstärker verwendet werden. Der Regelwert wird über eine durch die Amplitudenregler 18a, 18b ausgebildete Amplitudenregelung so nachgeführt, dass, wenn in einer Treiberspule der Strom ansteigt, er in der anderen Treiberspule abnimmt, jedoch kann auch eine einseitige Regelung vorgesehen sein. Dazu wird der Regelwert über den Inverter 19 invertiert. Der Regelwert 94 kann zur Bestimmung der Annäherung des Prüfobjekts verwendet werden. Über die Amplitudenregler 18a, 18b wird die den Treiberspulen zugeführte Leistung so geregelt, dass sich wieder der beschriebene Zustand an den Eingängen 16A, 16B des Vergleichers 16 ergibt. Dieses Prinzip ist aus der EP 0 706 648 B1 bekannt.

Bei einer idealen Anordnung liegt im Ausgangszustand als Spannungssignal S13 nur ein Verstärkerrauschen des Verstärkers 23 ohne taktsynchrone Anteile vor. Nähert sich ein Prüfkörper O, hat dies Einfluss auf die taktsynchrone Amplitudeninformation im Spannungssignal S13. Befindet sich ein Prüfkörper O im sensoraktiven Bereich, führt dies zu einer Amplitudenänderung im Abtastzeitpunkt. Durch Wahl des Abtastzeitpunkts (s.o.) können unter anderem z.B. Metallarten des Prüfkörpers unterschieden, eine ggf. maximale Empfindlichkeit bei bestimmten Metallarten oder z.B. ein Faktor 1 (gleiche Empfindlichkeit bei allen Metallarten) oder die Ausblendung von Metallarten erreicht werden. In Fig. 2 sind z.B. zwei Abtastzeitpunkte 91, 92 dargestellt, die einmal maximale Empfindlichkeit und einmal die Metallartenunterscheidung zeigen. Durch Phasenverschiebung liegt der Abtastzeitpunkt einmal zum Zeitpunkt 91 und einmal zum Zeitpunkt 92, wobei die in Fig. 2 dargestellten Spannungssignale von der jeweiligen Metallart, z.B. Eisen, Kupfer, Aluminium abhängig sind.

Verfahrengemäß induziert der den Treiberspulen 12, 13 zugeführte Strom im Takt der Taktschaltung ein so geartetes Magnetfeld in den Sensorspulen 14, 15, dass sich die Spannung an den Eingängen des Verstärkers 23 nach den Sensorspulen zueinander aufheben. Die Treiberspulen und Sensorspulen sind einmal gleichsinnig und einmal gegensinnig beschaltet. Die Abtastung der Spannungssignale zur Ermittlung des elektrischen Messsignals erfolgt vorzugsweise zu verschiedenen Zeitpunkten, so dass durch Wahl der Abtastzeitpunkte die oben genannten Zustände erfassbar sind, auch wenn es zusätzliche weitere Zustände gibt, die je nach Anwendungsfall gewünschte Ergebnisse liefern. Diese vier Zustände umfassen, wie oben beschrieben, die maximale Empfindlichkeit bei bestimmten Metallarten, die bei Buntmetallen größer ist als bei Eisen, eine gleiche Empfindlichkeit bei allen Metallarten und eine Metallartenunterscheidung sowie den Ausschluss von gewissen Metallarten. Das erfindungsgemäße Prinzip unterstützt dabei die zur Erfassung erforderliche Empfindlichkeit, so dass sich ein vergrößerter Schaltabstand ergibt. In der Praxis haben sich Schaltabstände von 20 mm bei 12 mm Sensordurchmesser mit Ganzmetallgehäuse und ferritfreien Spulen ergeben.

### Bezugszeichenliste

- 11: Taktschaltung
- 11a: Ausgang
- 11B, 11D: Ausgang
- 12, 13: Treiberspule
- 14, 15: Sensorspule
- 16: Vergleicher
- 16a, 16b: Eingang
- 16c: Ausgang
- 18a, 18b: Amplitudenregler
- 19: Inverter
- 20: Phasenschieber
- 22: Inverter
- 23: Verstärker
- 23a, 23b: Eingang
- 23c: Ausgang
- 35, 36: Leitung
- 41, 41B, 41D: Leitung
- 50B, 50D: Steuerleitung
- 60B, 60D: Leitung
- 94: Wert
- B, D: Schalter
- D1: Synchrondemodulator
- S13: Spannungssignal
- S16: Regelsignal

## Patentansprüche

1. Verfahren zum induktiven Erzeugen eines elektrischen Messsignals in Abhängigkeit wenigstens einer der zu messenden Größen umfassend Weg oder Position im Raum oder Materialeigenschaften eines zu detektierenden Prüfkörpers (O) unter Verwendung von wenigstens zwei Treiberspulen (12, 13), die im Takt einer Taktschaltung (11) nacheinander von einem Strom durchflossen werden, der in wenigstens einer Sensorspule eine von der wenigstens einen zu messenden Größe abhängige Spannung induziert, die im Takt der Taktschaltung (11) in den Treiberspulen (12, 13) zugeordnete Spannungssignale (S13) aufgeteilt wird, wobei die so erhaltenen Spannungssignale zum Erhalt eines Messsignals ausgewertet werden,
wobei den wenigstens zwei Treiberspulen (12, 13) wenigstens zwei Sensorspulen (14, 15) zugeordnet werden, wobei entweder die Sensorspulen (14, 15) oder die Treiberspulen (12, 13) gleichsinnig betrieben oder geschaltet sind, während die jeweils anderen Spulen, das heißt die Treiberspulen (12, 13) oder die Sensorspulen (14, 15), zueinander gegensinnig betrieben oder geschaltet sind, wobei die den Treiberspulen zugeordneten Spannungssignale der Sensorspulen zum Erhalt des Messsignals in bestimmten oder bestimmbaren Zeitabschnitten des Taktsignals abgetastet werden, und
wobei die Treiberspulen (12, 13) so betrieben werden, dass die jeweilige Einwirkung der Treiberspulen auf die Sensorspulen (14, 15) sich an einem Ausgang eines nach den Sensorspulen angeordneten Verstärkers aufheben.

2. Verfahren nach Anspruch 1, **dadurch gekennzeichnet, dass** die jeweils auf einer geometrischen Achse angeordneten Treiberspulen (12, 13) und Sensorspulen (14, 15) räumlich parallel zueinander angeordnet werden.

3. Verfahren nach Anspruch 1 oder 2, **dadurch gekennzeichnet, dass** die Sensorspulen (14, 15) gleichsinnig und die Treiberspulen (12, 13) zueinander gegensinnig geschaltet sind.

4. Verfahren nach einem der vorhergehenden Ansprüche, **dadurch gekennzeichnet, dass** die Sensorspulen (14, 15) so zusammengeschaltet sind , dass ein auf die wenigstens zwei Sensorspulen einwirkendes Fremdmagnetfeld keine Spannung am Ausgang (23c) des Verstärkers (23) erzeugt.

5. Verfahren nach einem der vorhergehenden Ansprüche, **dadurch gekennzeichnet, dass** die Anzahl der Treiberspulen (12, 13) der Anzahl der Sensorspulen (14, 15) entspricht.

6. Verfahren nach einem der vorhergehenden Ansprüche, **gekennzeichnet durch**
- taktweises Vergleichen der den Treiberspulen (12, 13) zugeordneten Spannungssignale zur Ermittlung eines Regelwertes (94) am Ausgang (16c) eines Vergleichers (16),
- Verwenden des Regelwerts zur Regelung einer Amplitude der den Treiberspulen (12, 13) zugeführten Leistung, so dass eine Amplitude der Spannungssignale an den Eingängen (16a, 16b) des Vergleichers im Wesentlichen gleich groß sind.

7. Sensorvorrichtung zum induktiven Erzeugen eines elektrischen Messsignals, in Abhängigkeit einer zu messenden Größe zum Bestimmen wenigstens einer der Größen umfassend Weg oder Position im Raum oder Materialeigenschaften eines zu detektierenden Prüfkörper (O), mit
- wenigstens zwei Treiberspulen (12, 13)
- einer Taktschaltung (11) zum nacheinander im Takt der Taktschaltung erfolgenden Ansteuern der Treiberspulen (12, 13) mit einem Strom,
- wenigstens zwei Sensorspulen, die den Treiberspulen (12, 13) zugeordnet sind und in denen von dem durch die Treiberspule (12, 13) fließenden Strom im Takt der Taktschaltung (11) eine von der wenigstens einen zu messenden Größe abhängige Spannung induziert wird,
- einem elektronischen Bauelement zur Aufteilung der induzierten Spannung im Takt der Taktschaltung in den Treiberspulen (12, 13) zugeordnete Spannungssignale,
- einer Abtastvorrichtung zum Abtasten von den Treiberspulen zugeordneten Spannungssignalen der Sensorspulen zum Erhalt des Messsignals in bestimmten oder bestimmbaren Zeitabschnitten des Taktsignals,
- wobei die Treiberspulen (12,13) so angeordnet sind, dass die Einwirkung der jeweiligen Treiberspulen auf die Sensorspulen (14, 15) sich am Ausgang (23c) eines nach den Sensorspulen angeordneten Verstärkers (23) aufheben.

8. Sensorvorrichtung nach Anspruch 7, **dadurch gekennzeichnet, dass** die jeweils auf einer geometrischen Achse angeordneten Treiberspulen (12, 13) und Sensorspulen (14, 15) räumlich parallel zueinender angeordnet sind.

9. Sensorvorrichtung nach Anspruch 7 oder 8, **dadurch gekennzeichnet, dass** die Sensorspulen (14, 15) gleichsinnig und die Treiberspulen (12, 13) zueinander gegensinnig geschaltet sind.

10. Sensorvorrichtung nach einem der vorhergehenden Ansprüche 7 bis 9, **dadurch gekennzeichnet, dass** die Sensorspulen (14, 15) so angeordnet sind, dass ein auf die wenigstens zwei Sensorspulen einwirkendes Fremdmagnetfeld keine Spannung am Ausgang (23c) des Verstärkers (23) erzeugt.

11. Sensorvorrichtung nach einem der vorhergehenden Ansprüche 7 bis 10, **dadurch gekennzeichnet, dass** eine Anzahl der Treiberspulen (12, 13) einer Anzahl der Sensorspulen (14, 15) entspricht.

12. Sensorvorrichtung nach einem der vorhergehenden Ansprüche 7 bis 11, **dadurch gekennzeichnet, dass** ein Vergleicher (16) zum Vergleich der den Treiberspulen (12, 13) zugeordneten Spannungssignale zur Ermittlung eines Regelwertes vorgesehen ist, und dass ein Amplitudenregler (18) vorgesehen ist, in dem der Regelwert zur Regelung einer Amplitude des den Treiberspulen zugeführten Stroms so geregelt ist, dass eine Amplitude der Spannungssignale an den Eingängen (16a, 16b) des Vergleichers (16) im Wesentlichen gleich groß sind.

## Claims

1. A method for inductively producing an electrical measuring signal in dependence on at least one of magnitudes to be measured which comprise the path or the position in space or at least one of material properties of a test object (O) using at least two driver coils (12, 13) through which a current is caused to flow sequentially at a clock pulse rate of a clock pulse circuit (11), said current inducing a voltage which is dependent on the at least one magnitude to be measured in at least one sensor coil and which voltage is sub-divided at the clock pulse rate of the clock pulse circuit (11) into voltage signals (S13) that are associated with the driver coils (12, 13), wherein the voltage signals obtained in this manner are evaluated so as to obtain the electrical measuring signal,
wherein the at least two sensor coils (14, 15) are associated with the at least two driver coils (12, 13), wherein either the sensor coils (14, 15) or the driver coils (12, 13) are operated in the same sense or connected up in the same sense, whereas the other respective coils, i.e. the driver coils (12, 13) or the sensor coils (14, 15) are operated in the mutually opposite sense or connected up in the mutually opposite sense, wherein the voltage signals of the sensor coils associated with the driver coils are sampled in certain time periods of the clock pulse signal for the purposes of obtaining the electrical measuring signal, and
wherein the driver coils (12, 13) are operated in such a way that the effect of the drive coils on the sensor coils (14, 15) is cancelled out at an output of an amplifier located downstream of the sensor coils.

2. A method in accordance with Claim 1, **characterized in that** the driver coils (12, 13) and the sensor coils (14, 15) respectively located on one geometrical axis are arranged spatially parallel to each other.

3. A method in accordance with Claim 1 or 2, **characterized in that** the sensor coils (14, 15) are connected up in the same sense and the driver coils (12, 13) are connected up in a mutually opposite sense.

4. A method in accordance with one of the preceding claims, **characterized in that** the sensor coils (14, 15) are connected together in such a way that an extraneous magnetic field effective upon the at least two sensor coils will not produce a voltage at the output (23c) of the amplifier (23).

5. A method in accordance with one of the preceding claims, **characterized in that** the number of driver coils (12, 13) corresponds to the number of sensor coils (14,15).

6. A method in accordance with one of the preceding claims, **characterized by**
- comparing the voltage signals associated with the driver coils (12, 13) in a clocked manner for the purposes of determining a regulating value (94) at the output (16c) of a comparator (16),
- using the regulating value for the purposes of regulating the amplitude of the power being supplied to the driver coils (12, 13) so that the amplitude of the voltage signals at the inputs (16a, 16b) of the comparator are equally large.

7. A sensor device for producing an electrical measuring signal inductively in dependence on a magnitude to be measured for the purposes of determining at least one of magnitudes comprising the path or the position in space or at least one of material properties of a test object (O), including
- at least two driver coils (12, 13)
- a clock pulse circuit (11) for sequentially at a clock pulse rate activating the driver coils (12, 13) with a current,
- at least two sensor coils which are associated with the driver coils (12, 13) and in which a voltage dependent on at least one of the magnitudes to be measured is induced by the current flowing through the driver coil (12, 13) at the clock pulse rate of the clock pulse circuit (11),
- an electronic component for subdividing the induced voltage into voltage signals associated with the driver coils (12, 13) at the clock pulse rate of the clock pulse circuit,
- a sampling device for sampling the voltage signals of the sensor coils associated with the driver coils for the purposes of obtaining the measuring signal in determined or determinable time periods of the clock pulse signal,
- wherein the driver coils (12, 13) are arranged in such a manner that the effect of the driver coils on the sensor coils (14, 15) is cancelled at an output (23c) of an amplifier (23) located downstream of the sensor coils.

8. A sensor device in accordance with Claim 7, **characterized in that** the driver coils (12, 13) and the sensor coils (14, 15) which are located on one respective geometrical axis are arranged such as to be spatially mutually parallel.

9. A sensor device in accordance with Claim 7 or 8, **characterized in that** the sensor coils (14, 15) are connected up in the same sense and the driver coils (12, 13) are connected up in a mutually opposite sense.

10. A sensor device in accordance with one of the Claims 7 to 9, **characterized in that** the sensor coils (14, 15) are arranged in such a way that an extraneous magnetic field which is effective on the at least two sensor coils does not produce a voltage at the output (23c) of the amplifier (23).

11. A sensor device in accordance with one of the Claims 7 to 10, **characterized in that** the number of driver coils (12, 13) corresponds to the number of sensor coils (14, 15).

12. A sensor device in accordance with one of the Claims 7 to 11 **characterized in that** there is provided a comparator (16) for comparing the voltage signals associated with the driver coils (12, 13) for the purposes of determining a regulating value, and **in that** there is provided an amplitude regulator (18) in which the regulating value for regulating the amplitude of the current supplied to the driver coils is regulated in such a way that the amplitude of the voltage signals at the inputs (16a, 16b) of the comparator (16) are equally large.

## Revendications

1. Procédé de production d'un signal de mesure électrique par induction en fonction d'au moins une des grandeurs à mesurer comprenant un chemin ou une position dans l'espace ou des propriétés du matériau d'un objet à détecter (O), par utilisation d'au moins deux bobines d'entraînement (12, 13) qui sont parcourues par un courant l'une après l'autre à la cadence d'un dispositif de cadencement (11), lequel induit dans au moins une bobine de détection une tension dépendant de ladite ou desdites grandeur(s) à mesurer, laquelle tension est divisée à la cadence du dispositif de cadencement (11) dans les bobines d'entraînement (12, 13) en des signaux de tension correspondants (S13), les signaux de tension ainsi obtenus étant exploités pour obtenir un signal de mesure,
dans lequel au moins deux bobines de détection (14, 15) sont associées aux deux bobines d'entraînement au moins (12, 13), les bobines de détection (14, 15) ou les bobines d'entraînement (12, 13) étant alimentées ou actionnées dans le même sens, tandis que les autres bobines respectives, à savoir, les bobines d'entraînement (12, 13) ou les bobines de détection (14, 15), sont alimentées ou actionnées dans des sens opposés, les signaux de tension des bobines de détection correspondant aux bobines d'entraînement étant échantillonnés durant des périodes déterminées ou déterminables du signal de cadence en vue de l'obtention du signal de mesure, et
les bobines d'entraînement (12, 13) étant actionnées de telle manière que les effets respectifs des bobines d'actionnement sur les bobines de détection (14, 15) s'annulent à une sortie d'un amplificateur disposé après les bobines de détection.

2. Procédé selon la revendication 1, **caractérisé en ce que** les bobines d'entraînement (12, 13) et les bobines de détection (14, 15) disposées chacune sur un axe géométrique sont disposées dans l'espace parallèlement les unes aux autres.

3. Procédé selon la revendication 1 ou 2, **caractérisé en ce que** les bobines de détection (14, 15) sont actionnées dans le même sens et les bobines d'entraînement (12, 13) dans des sens opposés.

4. Procédé selon l'une des revendications précédentes, **caractérisé en ce que** les bobines de détection (14, 15) sont actionnées ensemble de telle sorte qu'un champ magnétique étranger agissant sur les deux bobines de détection au moins ne produit aucune tension à la sortie (23c) de l'amplificateur (23).

5. Procédé selon l'une des revendications précédentes, **caractérisé en ce que** le nombre des bobines d'entraînement (12, 13) correspond au nombre des bobines de détection (14, 15).

6. Procédé selon l'une des revendications précédentes, **caractérisé par**
- une comparaison cadencée des signaux de tension associés aux bobines d'entraînement (12, 13) pour l'obtention d'une valeur de réglage (94) à la sortie (16c) d'un comparateur (16),
- l'emploi de la valeur de réglage pour régler l'amplitude de la puissance fournie aux bobines d'entraînement (12, 13), de sorte que les amplitudes des signaux de tension aux entrées (16a, 16b) du comparateur soit sensiblement égales.

7. Dispositif de détection pour la production par induction d'un signal de mesure électrique en fonction d'une grandeur à mesurer, pour la détermination d'au moins une des grandeurs comprenant un chemin ou une position dans l'espace ou des propriétés du matériau d'un objet (O) à détecter, présentant
- au moins deux bobines d'entraînement (12, 13),
- un dispositif de cadencement (11) pour le pilotage avec un courant des bobines d'entraînement (12,13) l'une après l'autre à la cadence du dispositif de cadencement,
- au moins deux bobines de détection qui sont associées aux bobines d'entraînement (12, 13) et dans lesquelles une tension dépendant de la grandeur à mesurer au moins est induite par le courant circulant dans les bobines d'entraînement (12, 13) à la cadence du dispositif de cadencement (11),
- un composant électronique pour diviser la tension induite à la cadence du dispositif de cadencement dans les bobines d'entraînement (12, 13) en des signaux de tension associés,
- un dispositif d'échantillonnage pour l'échantillonnage de signaux de tension des bobines de détection associés aux bobines d'entraînement en vue de l'obtention du signal de mesure durant des périodes déterminées ou déterminables du signal de cadence,
- dans lequel les bobines d'entraînement (12, 13) sont disposées de telle manière que les effets respectifs des bobines d'entraînement sur les bobines de détection (14, 15) s'annulent à la sortie (23c) d'un amplificateur (23) disposé après les bobines de détection.

8. Dispositif de détection selon la revendication 7, **caractérisé en ce que** les bobines d'entraînement (12, 13) et les bobines de détection (14, 15) disposées chacune sur un axe géométrique sont disposées dans l'espace parallèlement les unes aux autres.

9. Dispositif de détection selon la revendication 7 ou 8, **caractérisé en ce que** les bobines de détection (14, 15) sont actionnées dans le même sens et les bobines d'entraînement (12, 13) dans des sens opposés.

10. Dispositif de détection selon l'une des revendications précédentes 7 à 9, **caractérisé en ce que** les bobines de détection (14, 15) sont disposées de telle manière qu'un champ magnétique étranger agissant sur les deux bobines de détection au moins ne produit aucune tension à la sortie (23c) de l'amplificateur (23).

11. Dispositif de détection selon l'une des revendications précédentes 7 à 10, **caractérisé en ce que** le nombre des bobines d'entraînement (12, 13) correspond au nombre de bobines de détection (14, 15).

12. Dispositif de détection selon l'une des revendications précédentes 7 à 11, **caractérisé en ce qu'**un comparateur (16) est prévu pour la comparaison des signaux de tension associées aux bobines d'entraînement (12, 13) en vue de l'obtention d'une valeur de réglage et **en ce qu'**un régleur d'amplitude (18) est prévu, dans lequel la valeur de réglage est réglée pour le réglage d'une amplitude du courant fourni aux bobines d'entraînement de telle sorte que les amplitudes des signaux de tension aux entrées (16a, 16b) du comparateur (16) soient sensiblement égales.
